# FASCICULE DE BREVET EUROPEEN

(11) **EP 2 510 418 B1**
(45) Date de publication et mention de la délivrance du brevet: **14.06.2017**
(21) Numéro de dépôt: 10787112.1
(22) Date de dépôt: 03.12.2010
(51) Int. Cl.: G06F 1/16, G06F 3/033, A63F 13/98

(54) **UNITE DE CONTROLE POUR CONSOLE DE JEUX VIDEO MUNIE D'UN ECRAN TACTILE**
STEUERGERÄT FÜR EINE VIDEOSPIELKONSOLE MIT TAKTILEM DISPLAY
CONTROL UNIT FOR A VIDEO GAMES CONSOLE PROVIDED WITH A TACTILE SCREEN

(30) Priorité: 08.12.2009 FR 0905945
(43) Date de publication de la demande: 17.10.2012
(73) Titulaire: Bigben Interactive SA, 59818 Lesquin (FR)
(72) Inventeur: TILEY, Andrew, Hampshire SO16 8AY (GB); ALLAERT, Yannick, F-59221 Bauvin (FR); FALC, Alain, B-8500 Kortrijk (BE); LIDDLE, Mark, Bracknell RG42 4BZ (GB)
(74) Mandataire: Vigand, Philippe
(86) Numéro de dépôt international: PCT/EP2010/068809
(87) Numéro de publication internationale: WO 2011/069900

(56) Documents cités:
- EP-A1- 1 757 343
- US-A1- 2007 021 210
- US-A1- 2008 015 017
- US-B1- 6 921 336

## Description

La présente invention concerne une unité de contrôle pour console de jeu vidéo de salon comprenant des moyens d'affichage, un contrôleur de jeu comprenant une telle unité de contrôle ainsi qu'un système de jeu comprenant un tel contrôleur de jeu.

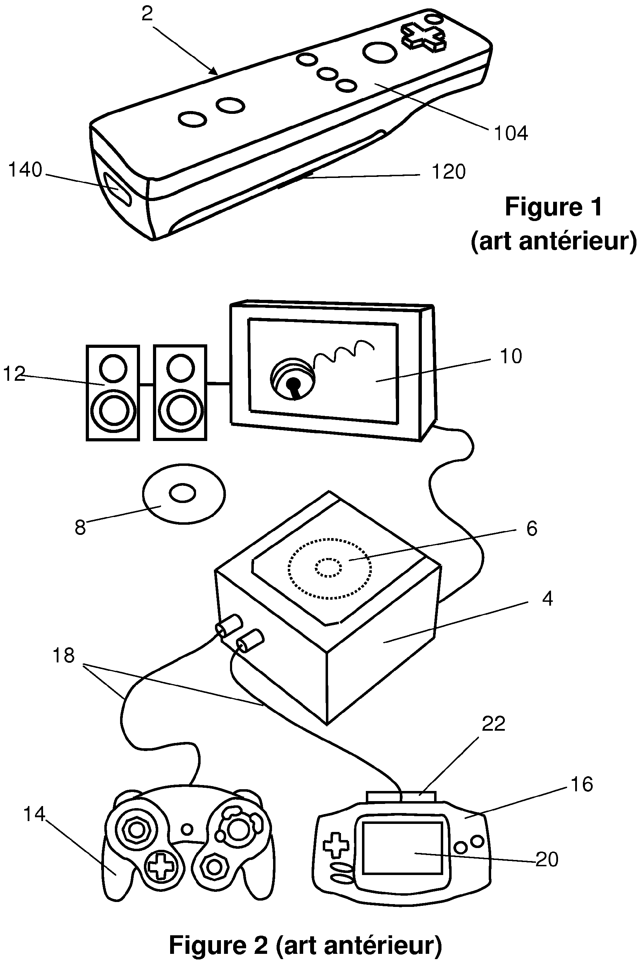

Il est connu dans l'art antérieur, l'utilisation d'une unité de contrôle 2 sensiblement parallélépipédique, illustrée à la figure 1. Cette unité de contrôle 2 est équipée de plusieurs capteurs (non représentés) lui permettant de se repérer dans l'espace et de retranscrire ses mouvements sur un écran central lié à une console de jeu vidéo de salon. Une telle unité de contrôle fournit une nouvelle manière de jouer, plus immersive pour le joueur.

Il est également connu dans l'art antérieur, notamment du document US 2003/216179, un système de jeu, illustré à la figure 2, comprenant une console de jeu vidéo de salon 4 munie d'un lecteur optique 6 de disque pour lire des disques optiques 8 servant de support de jeu et un câble de connexion relié à un dispositif d'affichage central 10, tel qu'un écran de télévision servant d'afficheur commun pour tous les joueurs connecté à un dispositif audio 12. La console 4 est également reliée à une ou plusieurs unités de contrôle 14, 16 par des câbles de connexion 18. L'unité de contrôle 16 est munie d'un écran 20 d'affichage à cristaux liquides (LCD) et comprend un logement pour recevoir un dispositif externe de stockage 22. Un accéléromètre est agencé soit directement dans l'unité de contrôle 16, soit dans le dispositif externe de stockage 22 inséré dans le logement prévu à cet effet. Les mouvements réalisés par le joueur tenant une unité de contrôle permettent de modifier l'affichage sur l'écran de télévision central par le traitement des signaux reçus par l'accéléromètre.

Un tel système de jeu permet également d'améliorer l'immersivité des joueurs dans le déroulement du jeu. Néanmoins, ce système présente certains inconvénients, notamment, l'écran LCD 20 de l'unité de contrôle 16 n'a pas d'usage dédié et n'est pas utilisé pour augmenter encore l'immersivité de jeu. Les possibilités de commande du joueur regroupent les boutons de commandes traditionnels auxquels vient s'ajouter les signaux reçus par l'accéléromètre de l'unité de contrôle. Toutefois, ces commandes ne permettent pas une interactivité rapide et directe du joueur sur des informations et/ou des images ou séquences relatives au jeu de sorte à pouvoir les modifier ou les personnaliser.

Il est connu par ailleurs, en particulier du document US 7 347 780, un système de jeu illustré à la figure 2, comprenant une console de jeu vidéo de salon 24 munie d'un lecteur optique 26 de disque pour lire des disques optiques 28 servant de supports de jeu et un câble de connexion 30 relié à un dispositif d'affichage central 32, tel qu'un écran de télévision servant d'afficheur commun pour tous les joueurs et comprenant une sortie audio 34. La console 24 est également reliée à une ou plusieurs unités de contrôle 36 et 38 par des câbles de connexion 40. Les unités de contrôle 36, 38 sont munies chacune d'un écran d'affichage à cristaux liquides (LCD) 42 sur lequel sont affichées des informations et/ou des images relatives au jeu. Un écran tactile 44 recouvrant l'écran LCD permet de détecter des commandes tactiles sous forme de séquence d'endroits touchés sur l'écran pour modifier les informations et/ou images affichées plus rapidement.

Un tel système de jeu bien que permettant une meilleure interactivité des joueurs sur le déroulement du jeu, présente néanmoins certains inconvénients. En effet, un tel système présente une immersivité de jeu limitée, le joueur ne bénéficiant pas de commandes permettant de détecter des mouvements du contrôleur de jeu susceptibles de modifier l'affichage d'informations et/ou d'images relatives au jeu.

Le but de la présente invention est de répondre aux différents inconvénients mentionnés ci-dessus et en particulier de fournir une unité de contrôle simple et peu coûteuse permettant de fournir à la fois une bonne immersivité et une bonne interactivité du joueur sur le déroulement du jeu et plus particulièrement sur les informations et/ou images affichées sur cette unité de contrôle.

Dans le cadre de la présente invention, il a été remarqué qu'une solution nouvelle qui consisterait à utiliser une unité de contrôle telle que décrite dans le document US 2003/216179, à laquelle on ajouterait des moyens de commande tactiles via un écran tactile recouvrant les moyens d'affichage de l'unité de contrôle, telles que présentées dans le document US 7 347 780, résulterait dans un nouveau contrôleur de jeu relativement coûteux et qui plus est inutile pour un certain nombre de jeux ne requérant que le caractère immersif sans nécessité le caractère interactif. Pour ces raisons, il a été préféré une solution permettant de tirer profit de la simplicité et des avantages de l'unité de contrôle illustrée à la figure 1, qui tout en fournissant les boutons de commande traditionnels d'une manette de jeu, fournit en outre des moyens de détection de mouvement. Il est connu par ailleurs, en particulier dans le document EP1757343, une unité de contrôle pour console de jeux vidéo de salon comprenant un logement apte à recevoir une deuxième unité de contrôle munie d'un accéléromètre et/ou de capteurs d'inclinaison. A cet effet, un premier aspect de l'invention concerne une unité de contrôle pour console de jeux vidéo de salon selon la revendication 1. De par sa compatibilité avec une deuxième unité de contrôle munie d'un accéléromètre et/ou de capteurs d'inclinaison, la première unité de contrôle s'avère peu coûteuse, tout en fournissant les caractères immersifs et interactifs recherchés et tout en laissant l'opportunité d'utiliser la deuxième unité de contrôle seule ou avec d'autres accessoires.

Selon un mode de réalisation avantageux, les informations et/ou images modifiées sont transmises par l'intermédiaire des moyens de connexion électrique à la deuxième unité de contrôle munie de moyens de communication avec la console de jeu vidéo. De cette manière, les modifications affectant les informations et/ou images affichées sur les moyens d'affichage de l'unité de contrôle peuvent être transmises par l'intermédiaire de la deuxième unité de contrôle à la console de jeu puis à l'affichage central, tel qu'un poste de télévision.

Selon un autre mode de réalisation avantageux, les signaux reçus de l'accéléromètre et/ou des capteurs d'inclinaison via les moyens de connexion électrique avec la deuxième unité de contrôle et les commandes tactiles reçues via l'écran tactile sont aptes à modifier simultanément les informations et/ou images affichées. L'utilisation simultanée de ces deux moyens de commande de l'affichage permet d'accroître encore les possibilités offertes en termes d'immersion et d'interaction avec le joueur.

Selon un autre mode de réalisation avantageux, une source d'alimentation est fournie par la deuxième unité de contrôle via des contacts électriques agencés dans le fond du logement. L'utilisation de l'énergie de la deuxième unité de contrôle pour alimenter la première permet de simplifier et de réduire encore les coûts de cette première unité de contrôle.

Selon un autre mode de réalisation avantageux, l'écran tactile est l'unique organe de commande de l'unité de contrôle, d'interaction directe sur les informations et/ou images affichées. Une telle unité de contrôle ne comportant que l'écran tactile comme organe de commande sans compter bien entendu ceux présents sur la deuxième unité de contrôle, s'avère encore plus simple et moins coûteuse pour sa fabrication.

Selon un autre mode de réalisation avantageux, le logement est pratiqué sur la face supportant les moyens d'affichage, de sorte à laisser accessible des boutons de commande de la deuxième unité de contrôle et une ouverture est pratiquée sur une face latérale en regard des moyens de communication de la deuxième unité de contrôle lorsqu'elle est insérée dans ledit logement. Un tel logement permet l'utilisation sans difficulté des boutons de commande et de moyens de communication de la deuxième unité de contrôle positionnée dans le logement. Avantageusement, les moyens d'affichage sont inversibles et le logement est constitué d'une empreinte apte à recevoir l'unité de contrôle dans deux positions inversées et comprenant des moyens de détection du sens d'insertion de l'unité de contrôle servant de moyens de commande de l'inversion des moyens d'affichage. Les moyens de détection du sens d'insertion sont de préférence des moyens automatiques de détection, formés par exemple par les contacts électriques d'alimentation de la première unité agencés dans le fond du logement. Ainsi, l'unité de contrôle pourra être utilisée aussi facilement par un droitier que par un gaucher suivant le sens d'insertion de la deuxième unité de contrôle dans le logement prévu à cet effet.

Selon un autre mode de réalisation avantageux, l'écran tactile comprend un cadre périphérique apte à supporter des grilles de jeu.

Selon un autre mode de réalisation avantageux, l'unité de contrôle comprend un embout apte à recevoir un accessoire pour former un ensemble immersif. Avantageusement, l'embout comprend des moyens de connexion électrique avec l'accessoire.

Selon un deuxième aspect, l'invention concerne un contrôleur de jeu constitué d'une première unité de contrôle selon le premier aspect et d'une deuxième unité de contrôle apte à être insérée dans le logement de la première unité de contrôle et à y être connectée via les moyens de connexion électrique prévu dans le logement, ladite deuxième unité de contrôle étant munie d'un accéléromètre et/ou de capteurs d'inclinaison et de moyens de communication avec la console de jeu vidéo.

Selon un autre mode de réalisation avantageux, la première unité de contrôle comprend l'écran tactile comme unique organe de commande d'interaction directe sur les informations et/ou images affichées et la deuxième unité de contrôle comprend des boutons de commande accessibles par une ouverture du logement.

Selon un troisième aspect, l'invention concerne un système de jeu comprenant une console de jeu vidéo de salon, un dispositif d'affichage central et au moins deux contrôleurs de jeu selon le deuxième aspect de l'invention, le système étant caractérisé en ce que chaque contrôleur de jeu est apte à être utilisé en réseau avec d'autres contrôleurs de jeu connectés à la console, le dispositif d'affichage central étant apte à afficher des informations et/ou images relatives au jeu, partagées entre les différents contrôleurs de jeu et les moyens d'affichage de chaque contrôleur de jeu étant aptes à afficher des informations et/ou images relatives au jeu, personnalisées.

Selon un autre mode de réalisation avantageux, les informations et/ou images personnalisées sont aptes à être modifiées par le biais des signaux reçus de l'accéléromètre et/ou des capteurs d'inclinaison et/ou par le biais des commandes tactiles reçues de l'écran tactile du contrôleur de jeu correspondant.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1, déjà décrite, représente une unité de contrôle existante munie d'un accéléromètre ;
- la figure 2, déjà décrite, représente un système de jeu immersif selon un premier art antérieur ;
- la figure 3, déjà décrite, représente un système de jeu interactif selon un deuxième art antérieur ;
- la figure 4 représente un contrôleur de jeu constitué d'une première unité de contrôle selon un mode de réalisation préférée de l'invention dans laquelle est insérée une deuxième unité de contrôle;
- les figures 5a et 5b représentent deux vues latérales opposées de la première unité de contrôle;
- la figure 6 représente une vue inversée de la première unité de contrôle;
- la figure 7 représente une vue de dessus de la première unité de contrôle sans la deuxième unité de contrôle;
- la figure 8 représente la première unité de contrôle équipée d'un accessoire;
- les figures 9a, 9b et 9c représentent une séquence d'informations et d'images affichées sur les moyens d'affichage de la première unité de contrôle selon un exemple de jeu;
- les figures 10a et 10b représentent les moyens d'affichage de la première unité de contrôle selon deux autres exemples de jeu.

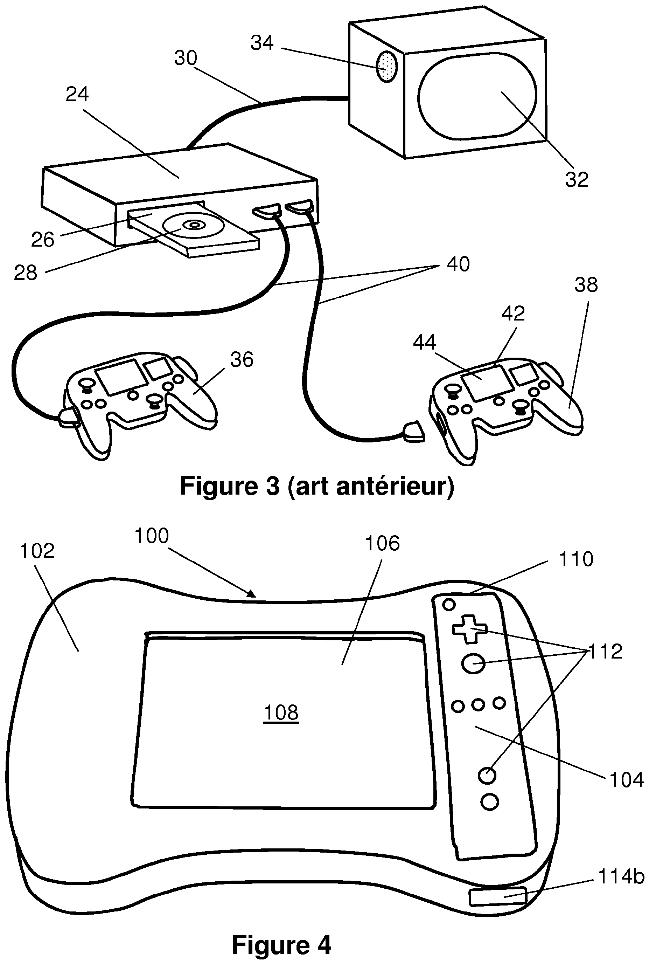

Dans la suite de la présente description, l'invention sera décrite uniquement à titre d'exemple non limitatif en relation avec les figures 4 à 10b, les figures 1 à 3 ayant été déjà décrites dans le cadre de l'art antérieur.

La figure 4 illustre un contrôleur de jeu 100 constitué d'une première unité de contrôle 102 dans laquelle est insérée une deuxième unité de contrôle 104. Ce contrôleur de jeu est destiné à être intégré dans un système de jeu similaire à ceux présentés aux figures 2 et 3.

La première unité de contrôle 102 comprend des moyens d'affichage 106, par exemple un écran LCD, permettant d'afficher des informations et/ou des images relatives au jeu en cours. Cet écran LCD est recouvert par un écran tactile 108 susceptible de détecter des commandes tactiles sous forme de séquence d'endroits touchés sur l'écran. Ces commandes tactiles permettent de modifier les informations et/ou images affichées. La première unité de contrôle 102 comprend en outre un logement 110 destiné à recevoir la deuxième unité de contrôle 104. Avantageusement, la première unité de contrôle comprend uniquement l'écran tactile comme organe de commande d'interaction directe sur le déroulement du jeu et donc sur les informations et/ou images affichées.

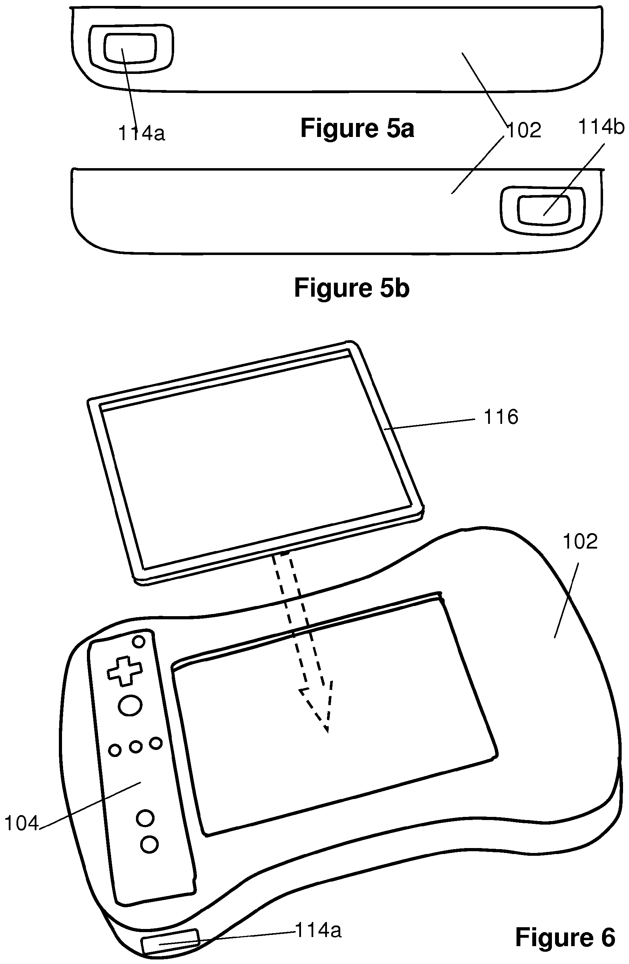

La deuxième unité de contrôle 104 est avantageusement une unité similaire à celle illustrée à la figure 1. Cette unité de contrôle 104 est munie d'un accéléromètre et/ou de capteurs d'inclinaison (non représentés). Des moyens de connexion électrique (138, figure 6 ; 140, figure 1) entre les deux unités de contrôle sont prévus de sorte que les signaux reçus par l'accéléromètre et/ou les capteurs d'inclinaison permettent également de modifier les informations et/ou images affichées sur l'écran LCD. Le logement 110 de la première unité de contrôle est pratiqué sur la face supportant les moyens d'affichage 106, de sorte à laisser accessibles des boutons de commande 112 de la deuxième unité de contrôle agencés sur sa face supérieure. Les boutons de commande 112 pourront être utilisées de manière traditionnelle.

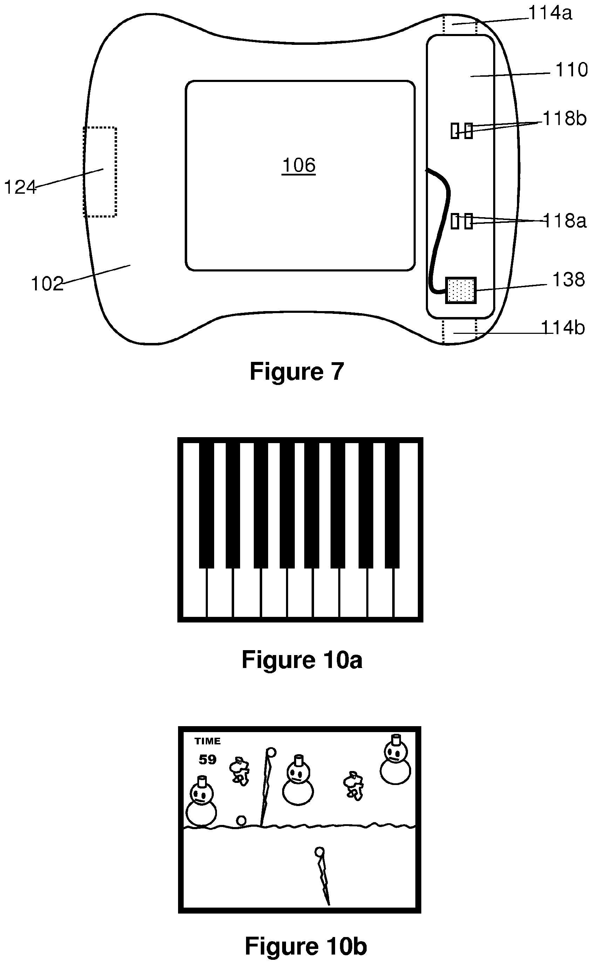

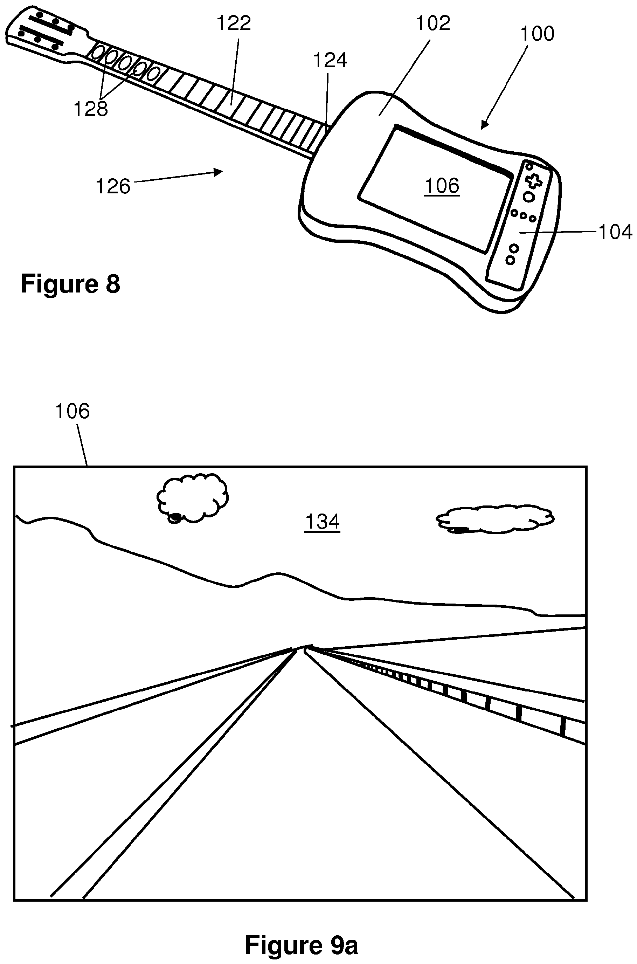

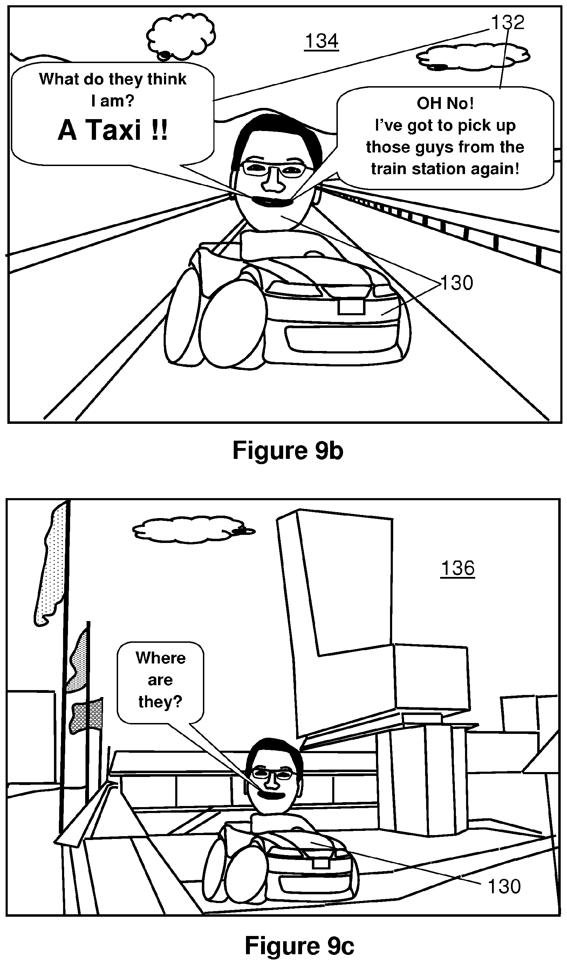

Avantageusement, les signaux reçus de l'accéléromètre et/ou des capteurs d'inclinaison via les moyens de connexion électrique avec la deuxième unité de contrôle et les commandes tactiles reçus via l'écran tactile sont aptes à modifier simultanément les informations et/ou images affichées. La combinaison de ces deux commandes, à savoir détection du mouvement du contrôleur de jeu 100 et détection des touchers effectués sur l'écran 108, permet d'offrir une nouvelle façon de jouer immersive et interactive, comme cela sera illustré avec les figures 9a, 9b, 9c et 10b.

On notera encore que la première unité de contrôle 102 est connectée à la console de jeu du système uniquement par l'intermédiaire de la deuxième unité de contrôle 104, ce qui permet de simplifier l'électronique de la première unité. A cet effet, la première unité est de préférence connectée à la deuxième unité par l'intermédiaire d'un connecteur (140, figure 2) déjà présent sur cette dernière. Pour cela il est prévu un câble interne (138, figure 7) débouchant dans le logement 110. De cette manière toutes les commandes tactiles peuvent être transmises à la deuxième unité puis à la console. Il peut être prévu un interrupteur manuel pour actionner cette fonctionnalité.

La figure 5a représente une vue latérale de la première unité de contrôle 102. Comme mentionné précédemment, la deuxième unité de contrôle comprend avantageusement des moyens de communication avec la console de jeu vidéo, comme par exemple des moyens de transmission radiofréquences ou par infrarouges. Pour assurer une bonne transmission entre la deuxième unité de contrôle et la console de jeu, il est prévu que la première unité de contrôle 102 comprenne, sur une face latérale, une ouverture 114a agencée en regard des moyens de communication de la deuxième unité de contrôle lorsqu'elle est insérée dans le logement prévu à cet effet.

Selon un mode de réalisation avantageux, il est prévu que la première unité de contrôle soit « ambidextre », c'est-à-dire utilisable tant par un droitier que par un gaucher. A cet effet, la première unité de contrôle 102 présente de préférence une forme générale symétrique par rapport à l'écran LCD 106. Ainsi pour utiliser le contrôleur de jeu 100 dans une configuration droitier ou gaucher, il suffit de positionner la deuxième unité de contrôle tel que cela est représenté à la figure 4 (configuration droitier), respectivement à la figure 6 (configuration gaucher). La figure 5b représente une vue latérale de la première unité de contrôle 102 opposée à la figure 5a. Pour assurer une bonne transmission entre la deuxième unité de contrôle et la console de jeu, il est prévu sur la face latérale opposée à celle comportant l'ouverture 114a, une ouverture 114b également agencée en regard des moyens de communication de la deuxième unité de contrôle lorsqu'elle est insérée dans le logement dans la configuration gaucher. Les ouvertures 114a et 114b peuvent être recouvertes par une lentille.

Revenant à la figure 6, elle représente donc une vue inversée de la première unité de contrôle 102 dans laquelle a été insérée en configuration gaucher la deuxième unité de contrôle 104.

Il est prévu en outre de pouvoir doter l'écran tactile 108 d'un cadre périphérique 116 apte à supporter des grilles de jeu comme représenté par exemple à la figure 10a. Un tel cadre permet de modifier l'affichage visible par le joueur sans nécessiter de faire fonctionner les moyens d'affichage la première unité de contrôle, seules sont détectées les commandes tactiles sur l'écran tactile.

La figure 7 représente une vue de dessus de la première unité de contrôle 102 sans la deuxième unité de contrôle dans son logement 110. Sur cette figure sont visibles les moyens de connexion électrique 138 de la première unité destinés à être connectés avec les moyens de connexion (140, figure 1) de la deuxième unité, ainsi que des contacts électriques 118a (pour la configuration droitier), 118b (pour la configuration gaucher) agencés au fond du logement 110 pour venir en contact avec des moyens de contact (120, figure 1) correspondants agencés sur la face inférieure de la deuxième unité (104, figure 1). Ainsi, lorsque la deuxième unité de contrôle est insérée dans la configuration droitier (figure 4), les contacts 120 de la deuxième unité sont en contact avec les contacts 118a de la première unité assurant l'alimentation de la première unité par la deuxième, la connexion électrique entre les deux unités de contrôle étant assuré par l'introduction de l'élément de connexion 138 de la première unité dans l'élément de connexion 140 correspondant de la deuxième unité. Les moyens de communication de la deuxième unité sont alors disposés en regard de l'ouverture latérale 114a. De même, lorsque la deuxième unité de contrôle est insérée dans la configuration gaucher (figure 6), les éléments de connexion 138 et 140 assurent la connexion électrique entre les deux unités de contrôle tandis que les contacts électriques 120 sont en contact avec les contacts 118b correspondants de la première unité assurant l'alimentation de la première unité. Dans cette autre position, les moyens de communication de la deuxième unité sont alors disposés en regard de l'ouverture latérale 114b.

Pour assurer le caractère ambidextre de la première unité de contrôle, il est prévu que les moyens d'affichage 106 soient inversibles. Les contacts électriques 118a, 118b sont alors utilisés comme moyens de détection automatique du sens d'insertion de l'unité de contrôle. En effet, les contacts 118a ou 118b entrant respectivement en contact avec les contacts 120 correspondant de la deuxième unité selon la configuration utilisée permettant de déterminer le sens d'insertion de la deuxième unité et de commander de manière adéquate l'inversion des moyens d'affichage si nécessaire.

La figure 8 représente la première unité de contrôle 102 équipée d'un accessoire 122. Pour cela, la première unité 102 comprend un logement en creux 124 (voir aussi figure 7), ou alternativement un embout proéminent, apte à recevoir un accessoire 122 de manière à former un ensemble immersif 126, comme par exemple une guitare. Il est prévu de pouvoir l'embout 124 de moyens de connexion électrique avec l'accessoire 122 de sorte à augmenter encore les possibilités de jeu avec le contrôleur de jeu formé par les deux unités de contrôle 102 et 104 assemblées. Ainsi par exemple, l'accessoire 122, en forme de manche, peut comprendre des boutons de commande 128 permettant de simuler la pression des doigts sur des cordes, tandis que l'écran LCD 106 affichera des cordes de guitare et détectera par l'intermédiaire de l'écran tactile le recouvrant, les commandes de grattage du joueur, et que la deuxième unité sera utilisée pour détecter les mouvements du joueur et les afficher par exemple sur l'écran central relié à la console (non représentés). De manière plus générale, on comprendra que l'embout prévu permet d'y adapter un accessoire pour transformer l'aspect du contrôleur de jeu et le rendre plus immersif.

Les figures 9a, 9b et 9c représentent une séquence d'informations et d'images affichées sur les moyens d'affichage 106 de la première unité de contrôle selon un exemple de jeu; interactif et immersif. La figure 9a représente la sélection d'un paysage de départ 134 qui peut être obtenu par toutes sortes de commande y compris les commandes tactiles. Ensuite, le joueur pourra personnaliser le jeu en utilisant des images personnelles 130 représentant par exemple sa propre voiture et son propre visage. Il peut également insérer des dialogues personnalisés 132. Dans la suite du déroulement du jeu, le joueur peut utiliser soit les commandes tactiles de la première unité de contrôle, soit les commandes d'accélération de la deuxième unité de contrôle, soit les deux simultanément pour faire évoluer l'affichage. Ainsi, par exemple, il pourra utiliser ses doigts sur l'écran tactile pour faire avancer son personnage ou pour modifier les dialogues dans une liste préprogrammée de dialogues. La figure 9c montre un affichage modifié sur lequel le personnage et sa voiture 130 se sont déplacés de sorte à arriver à destination. Le déplacement entre le paysage initial 134 (figures 9a, 9b) représentant une route et le paysage de destination 136 (figure 9c) représentant une gare peut par exemple être effectué par l'intermédiaire des signaux reçus de l'accéléromètre de la deuxième unité permettant au personnage et à sa voiture 130 d'évoluer sur un circuit routier (séquence d'images non représentée) reliant le paysage de départ et d'arrivée. Pendant le déplacement effectué par utilisation du contrôleur de jeu comme un volant, le joueur pourra être amené à toucher l'écran pour effectuer des actions supplémentaires prévus dans le déroulement du jeu, comme par exemple klaxonner en appuyant deux fois sur l'écran tactile, mettre son clignotant en faisant glissant son doigt vers la droite ou la gauche de l'écran, etc.

Les figures 10a et 10b représentent les moyens d'affichage de la première unité de contrôle selon deux autres exemples de jeu. La figure 10a représente un exemple dans lequel une grille de jeu de piano a été inséré dans le cadre présenté à la figure 6. Dans le même temps, un jeu de simulation de piano est lancé sur la console permettant d'interpréter les commandes tactiles reçues sur l'écran tactile. Il pourra être prévu avantageusement de détecter la force et la durée des contacts de doigts sur les touches du piano pour restituer fidèlement le son qu'aurait occasionné ce même toucher sur un vrai piano. La figure 10b représente un jeu d'arcade mettant en oeuvre des bonhommes de neige derrière lesquelles peuvent s'abriter des personnages. Le joueur par exemple devra par l'intermédiaire des commandes tactiles envoyer des boules de neige pour atteindre les personnages, dans le même il pourra faire usage des capteurs de la deuxième unité pour éviter des boules de neige lancées sur lui par un autre joueur.

Ayant présenté ci-dessus l'invention au moyen de quelques exemples, on comprendra que le contrôleur de jeu résultant de l'assemblage des deux unités de contrôle offre un grand nombre de possibilité en termes d'immersion et d'interaction pour le joueur. Notamment, l'intégration d'un écran tactile sur la première unité fournit une grande flexibilité en supplément des possibilités offertes par les capteurs d'accélération ou d'inclinaison présents sur la deuxième unité. Le tout permet un contrôle précis des pointeurs et des personnages. On comprendra en outre que l'utilisation d'un tel contrôleur s'avère très intuitive et disposent de commandes faciles à utiliser.

On pourra citer, parmi les autres applications envisageables pour un tel contrôleur, la peinture, le dessin, l'écriture, le traitement d'images et de vidéos, la création d'animation personnalisées intégrables dans un jeu dédié, le traitement de texte, le navigateur Internet. Ce contrôleur s'avère également bien adapté aux jeux éducatifs avec usage possible d'un stylet. Ainsi par exemple, le programme pourra demander d'entrer des mots et de les associer avec des images montrées à l'écran, de compléter des mots en remplissant avec les lettres manquantes, de former des lettres en utilisant un stylet spécial. Le programme pourra également prononcer chaque lettre et le mot formé par des lettres pour aider à enseigner les sons. Le programme pourra également lire des histoires tout en permettant au joueur d'interagir avec l'histoire en appuyant sur l'écran tactile ou de s'immerger en utilisant les commandes de la deuxième unité. Le joueur pourra aussi personnaliser les personnages et les ajouter à l'histoire avec leurs propres noms (voir figures 9a, 9b, 9c), ainsi que l'ambiance sonore en ajoutant de la musique et des effets sonores de leurs créations et créer ainsi leur véritable histoire animée. Des grilles de jeu spécifiques pourront être disposés dans le cadre prévu à cet effet pour les différentes parties du jeu ou de l'histoire. On comprend qu'un tel contrôleur présente l'avantage d'aider les enfants à développer intuitivement la coordination entre leur main et leurs yeux ainsi qu'à développer leur créativité.

Comme mentionné à plusieurs reprises, un tel contrôleur de jeu permet avantageusement de tirer profit de deux commandes, l'une tactile et l'autre par détection de mouvement, pour fournir des jeux avec une interface immersive et interactive. Par exemple, un jeu de labyrinthe dans lequel le joueur doit faire évoluer une balle en bougeant le contrôleur de jeu qui répercutera les mouvements subis et détectés grâce aux capteurs de la deuxième unité de contrôle, tout en évitant dans le même temps des pièges, en utilisant des commandes tactiles de tapotement ou de frottement de l'écran à des endroits indiqués, voire même de dessiner quelque chose lui permettant de contourner le piège tendu, par exemple un pont pour passer une rivière et ainsi progresser dans le labyrinthe.

On pourra noter enfin qu'un tel contrôleur de jeu est particulièrement adapté pour des jeux en réseau pour lesquels certaines informations et/ou images doivent être affichées uniquement pour le joueur concerné par l'intermédiaire de son contrôleur et ou d'autres informations et/ou images sont affichées pour être visibles par tous les joueurs sur l'écran central du système de jeu.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées.

## Revendications

1. Unité de contrôle (102) pour console de jeux vidéo de salon, comprenant un logement (110) apte à recevoir une deuxième unité de contrôle (104) munie d'un accéléromètre et/ou de capteurs d'inclinaison, ledit logement étant pourvu de moyens de connexion électrique (138, 140) entre les deux unités de contrôle, **caractérisée en ce que** l'unité de contrôle comporte des moyens d'affichage (106) d'informations et/ou d'images relatives au jeu et **en ce que** lesdites informations et/ou images affichées sont aptes à être modifiées par ladite unité de contrôle, par des signaux reçus par l'accéléromètre et/ou les capteurs d'inclinaison et transmis aux moyens d'affichage par l'intermédiaire desdits moyens de connexion électrique, et **en ce qu'**il est prévu un écran tactile (108) recouvrant au moins partiellement les moyens d'affichage et détectant des commandes tactiles sous forme de séquence d'endroits touchés sur l'écran également aptes à modifier lesdites informations et/ou images affichées,
**en ce que** les moyens d'affichage (106) sont inversibles et **en ce que** le logement (110) est constituée d'une empreinte apte à recevoir la deuxième unité de contrôle (104) dans deux positions inversées et comprenant des moyens de détection (114a, 114b) du sens d'insertion de la deuxième unité de contrôle servant de moyens de commande de l'inversion des moyens d'affichage.

2. Unité de contrôle (102) selon la revendication 1, **caractérisée en ce que** les informations et/ou images modifiées sont transmises par l'intermédiaire des moyens de connexion électrique (138, 140) à la deuxième unité de contrôle (104) munie de moyens de communication avec la console de jeu vidéo.

3. Unité de contrôle (102) selon la revendication 1 ou 2, **caractérisée en ce que** les signaux reçus de l'accéléromètre et/ou des capteurs d'inclinaison via les moyens de connexion électrique (138, 140) avec la deuxième unité de contrôle (104) et les commandes tactiles reçus via l'écran tactile sont aptes à modifier simultanément les informations et/ou images affichées.

4. Unité de contrôle (102) selon l'une des revendications 1 à 3, **caractérisée en ce qu'**une source d'alimentation est fournie par la deuxième unité de contrôle via des contacts électriques (118a, 118b, 120).

5. Unité de contrôle (102) selon l'une des revendications 1 à 4, **caractérisée en ce que** l'écran tactile (108) est l'unique organe de commande de l'unité de contrôle, d'interaction directe sur les informations et/ou images affichées.

6. Unité de contrôle (102) selon la revendication 5, **caractérisée en ce que** le logement (110) est pratiqué sur la face supportant les moyens d'affichage (106), de sorte à laisser accessibles des boutons de commande (112) de la deuxième unité de contrôle (104) et **en ce qu'**une ouverture (114a, 114b) est pratiquée sur une face latérale en regard des moyens de communication de la deuxième unité de contrôle lorsqu'elle est insérée dans ledit logement.

7. Unité de contrôle (102) selon la revendication 1, **caractérisée en ce que** les moyens de détection du sens d'insertion sont des moyens de détection automatiques formés par les contacts électriques d'alimentation (114a, 114b) agencés dans le fond du logement (110).

8. Unité de contrôle (102) selon l'une des revendications 1 à 7, **caractérisée en ce que** l'écran tactile (108) comprend un cadre (116) périphérique apte à supporter des grilles de jeu.

9. Unité de contrôle (102) selon l'une des revendications 1 à 8, **caractérisée en ce qu'**elle comprend un logement (124) apte à recevoir un accessoire (122) pour former un ensemble immersif (126).

10. Unité de contrôle (102) selon la revendication 9, **caractérisée en ce que** le logement (124) comprend des moyens de connexion électrique avec l'accessoire (122).

11. Contrôleur de jeu (100) **caractérisé en ce qu'**il comprend une première unité de contrôle (102) selon l'une des revendications précédentes et une deuxième unité de contrôle (104) apte à être insérée dans le logement (110) de la première unité de contrôle et à y être connectée via les moyens de connexion électrique (138) prévus dans le logement, ladite deuxième unité de contrôle étant munie d'un accéléromètre et/ou de capteurs d'inclinaison et de moyens de communication avec la console de jeu vidéo.

12. Contrôleur de jeu (100) selon la revendication 11, **caractérisé en ce que** la première unité de contrôle (102) comprend l'écran tactile (108) comme unique organe de commande d'interaction directe sur les informations et/ou images affichées et **en ce que** la deuxième unité de contrôle (104) comprend des boutons de commande (112) accessibles par une ouverture du logement (110).

13. Système de jeu comprenant une console de jeu vidéo de salon, un dispositif d'affichage central et au moins deux contrôleurs de jeu (100) selon la revendication 11 ou 12, **caractérisé en ce que** chaque contrôleur de jeu est apte à être utilisé en réseau avec d'autres contrôleurs de jeu connectés à la console, le dispositif d'affichage central étant apte à afficher des informations et/ou images relatives au jeu, partagées entre les différents contrôleurs de jeu et les moyens d'affichage (106) de chaque contrôleur de jeu étant aptes à afficher des informations et/ou images relatives au jeu, personnalisées.

14. Système de jeu selon la revendication 13, **caractérisé en ce que** les informations et/ou images personnalisées sont aptes à être modifiées simultanément par le biais des signaux reçus de l'accéléromètre et/ou des capteurs d'inclinaison et/ou par le biais des commandes tactiles reçues de l'écran tactile (108) du contrôleur de jeu (100) correspondant.

## Patentansprüche

1. Steuereinheit (102) für Salon-Videospielkonsole, umfassend eine Aufnahme (110), die imstande ist, eine zweite Steuereinheit (104) aufzunehmen, die mit einem Beschleunigungsmesser und/oder Neigungssensoren ausgestattet ist, wobei die Aufnahme mit elektrischen Anschlussmitteln (138, 140) zwischen den zwei Steuereinheiten ausgestattet ist, **dadurch gekennzeichnet, dass** die Steuereinheit Anzeigemittel (106) von Informationen und/oder Bildern aufweist, die sich auf das Spiel beziehen, und dass die angezeigten Informationen und/oder Bilder imstande sind, von der Steuereinheit durch vom Beschleunigungsmesser und/oder den Neigungssensoren empfangene Signalen verändert und an die Anzeigemittel über die elektrischen Anschlussmittel übertragen zu werden, und dass ein taktiler Bildschirm (108) vorgesehen ist, welcher mindestens teilweise die Anzeigemittel bedeckt und taktile Befehle in Form von Sequenzen berührter Stellen auf dem Bildschirm erfasst, die ebenfalls imstande sind, die angezeigten Informationen und/oder Bilder zu verändern,
dass die Anzeigemittel (106) umkehrbar sind und dass die Aufnahme (110) von einem Eindruck gebildet ist, der imstande ist, die zweite Steuereinheit (104) in zwei umgekehrten Positionen aufzunehmen und Erfassungsmittel (114a, 114b) der Einsetzrichtung der zweiten Steuereinheit umfasst, die als Steuermittel der Umkehr der Anzeigemittel dienen.

2. Steuereinheit (102) nach Anspruch 1, **dadurch gekennzeichnet, dass** die veränderten Informationen und/oder Bilder über die elektrischen Anschlussmittel (138, 140) an die zweite Steuereinheit (104) übertragen werden, die mit Kommunikationsmitteln mit der Videospielkonsole ausgestattet sind.

3. Steuereinheit (102) nach Anspruch 1 oder 2, **dadurch gekennzeichnet, dass** die vom Beschleunigungsmesser und/oder den Neigungssensoren über die elektrischen Anschlussmittel (138, 140) mit der zweiten Steuereinheit (104) erhaltenen Signale und die über den taktilen Bildschirm erhaltenen taktilen Befehle imstande sind, die angezeigten Informationen und/oder Bilder gleichzeitig zu verändern.

4. Steuereinheit (102) nach einem der Ansprüche 1 bis 3, **dadurch gekennzeichnet, dass** eine Versorgungsquelle von der zweiten Steuereinheit über elektrische Kontakte (118a, 118b, 120) bereitgestellt wird.

5. Steuereinheit (102) nach einem der Ansprüche 1 bis 4, **dadurch gekennzeichnet, dass** der taktile Bildschirm (108) das einzige Steuerorgan der Steuereinheit direkter Interaktion auf die angezeigten Informationen und/oder Bilder ist.

6. Steuereinheit (102) nach Anspruch 5, **dadurch gekennzeichnet, dass** die Aufnahme (110) auf der Fläche ausgearbeitet ist, welche die Anzeigemittel (106) trägt, so dass die Steuerknöpfe (112) der zweiten Steuereinheit (104) erreichbar bleiben und dass eine Öffnung (114a, 114b) auf einer Seitenfläche gegenüber den Kommunikationsmitteln der zweiten Steuereinheit ausgearbeitet ist, wenn sie in die Aufnahme eingesetzt ist.

7. Steuereinheit (102) nach Anspruch 1, **dadurch gekennzeichnet, dass** die Erfassungsmittel der Einsetzrichtung automatische Erfassungsmittel sind, die von elektrischen Versorgungskontakten (114a, 114b) gebildet sind, die im Boden der Aufnahme (110) ausgebildet sind.

8. Steuereinheit (102) nach einem der Ansprüche 1 bis 7, **dadurch gekennzeichnet, dass** der taktile Bildschirm (108) einen Umfangsrahmen (116) umfasst, der imstande ist, Spielmasken zu tragen.

9. Steuereinheit (102) nach einem der Ansprüche 1 bis 8, **dadurch gekennzeichnet, dass** sie eine Aufnahme (124) umfasst, die imstande ist, ein Zubehör (122) aufzunehmen, um eine immersive Einheit (126) zu bilden.

10. Steuereinheit (102) nach Anspruch 9, **dadurch gekennzeichnet, dass** die Aufnahme (124) elektrische Anschlussmittel mit dem Zubehör (122) umfasst.

11. Spielcontroller (100), **dadurch gekennzeichnet, dass** er eine erste Steuereinheit (102) nach einem der vorangehenden Ansprüche umfasst und eine zweite Steuereinheit (104), die imstande ist, in die Aufnahme (110) der ersten Steuereinheit eingesetzt zu sein und dort über die in der Aufnahme vorgesehenen elektrischen Anschlussmittel (138) angeschlossen zu sein, wobei die zweite Steuereinheit mit einem Beschleunigungsmesser und/oder Neigungssensoren und Kommunikationsmitteln mit der Videospielkonsole ausgestattet ist.

12. Spielcontroller (100) nach Anspruch 11, **dadurch gekennzeichnet, dass** die erste Steuereinheit (102) den taktilen Bildschirm (108) als einziges Steuerorgan direkter Interaktion auf die angezeigten Informationen und/oder Bilder umfasst und dass die zweite Steuereinheit (104) Steuerknöpfe (112) umfasst, die durch eine Öffnung der Aufnahme (110) erreichbar sind.

13. Spielsystem, umfassend eine Salon-Videospielkonsole, eine zentrale Anzeigevorrichtung und mindestens zwei Spielcontroller (100) nach Anspruch 11 oder 12, **dadurch gekennzeichnet, dass** jeder Spielcontroller imstande ist, im Netz mit andern Spielcontrollern, die mit der Konsole verbunden sind, benutzt zu werden, wobei die zentrale Anzeigeeinheit imstande ist, sich auf das Spiel beziehende Informationen und/oder Bilder anzuzeigen, die zwischen den verschiedenen Spielcontrollern geteilt werden und die Anzeigemittel (106) jedes Spielcontrollers imstande sind, personalisierte, sich auf das Spiel beziehende Informationen und/oder Bilder anzuzeigen.

14. Spielsystem nach Anspruch 13, **dadurch gekennzeichnet, dass** die personalisierten Informationen und/oder Bilder imstande sind, anhand vom Beschleunigungsmesser und/oder den Neigungssensoren und/oder anhand taktiler Befehle, erhalten vom taktilen Bildschirm (108) des entsprechenden Spielcontrollers (100), erhaltener Signale gleichzeitig verändert zu werden.

## Claims

1. A control unit (102) for a parlour video game console comprising a housing (110) capable of receiving a second control unit (104) provided with an accelerometer and/or tilt sensors, said housing being provided with electric connection means (138, 140) between both control units, **characterized in that** the control unit includes means (106) for displaying information and/or images relating to the game and **in that** said information and/or said displayed images are able to be modified, by signals received by the accelerometer and/or the tilt sensors and transmitted to the display means via said electric connection means, and **in that** a touch screen (108) is provided, at least partly covering the display means and detecting tactile commands as a sequence of locations touched on the screen also able to modify said information and/or displayed images,
**in that** the display means (106) are invertible and **in that** the housing (110) consists of an imprint able receive the second control unit (104) in two inverted positions and comprising detection means (114a, 114b) for detecting the insertion direction of the second control unit used as means for controlling the inversion of the display means.

2. The control unit (102) according to claim 1, **characterized in that** the modified information and/or images are transmitted via electric connection means (138, 140) to the second control unit (104) provided with means for communicating with the video game console.

3. The control unit (102) according to claim 1 or 2, **characterized in that** the signals received from the accelerometer and/or the tilt sensors via the electric connection means (138, 140) with the second control unit (104) and the tactile commands received via the touch screen are able to simultaneously modify the displayed information and/or images.

4. The control unit (102) according to one of claims 1 to 3, **characterized in that** a power supply source is provided by the second control unit via electric contacts (118a, 118b, 120).

5. The control unit (102) according to one of claims 1 to 4, **characterized in that** the touch screen (108) is the exclusive control member for the control unit for direct interaction on the displayed information and/or images.

6. The control unit (102) according to claim 5, **characterized in that** the housing (110) is made on the face supporting the display means (106) so as to leave the control buttons (112) accessible of the second control unit (104) and **in that** an opening (114a, 114b) is made on a side face facing the communication means of the second control unit when it is inserted into said housing.

7. The control unit (102) according to claim 1, **characterized in that** the means for detecting the insertion direction are automatic detection means formed by the electric power supply contacts (114a, 114b) laid out in the bottom of the housing (110).

8. The control unit (102) according to one of claims 1 to 7, **characterized in that** the touch screen (108) comprises a peripheral frame (116) able to support game grids.

9. The control unit (102) according to one of claims 1 to 8, **characterized in that** it comprises a housing (124) able to receive an accessory (122) for forming an immersive assembly (126).

10. The control unit (102) according to claim 9, **characterized in that** the housing (124) comprises means for electric connection with the accessory (122).

11. A game controller (100) **characterized in that** it comprises a first control unit (102) according to one of the preceding claims, and a second control unit (104) able to be inserted into the housing (110) of the first control unit and to be connected therein via the electric connection means (138) provided in the housing, said second control unit being provided with an accelerometer and/or with tilt sensors and means for communicating with the video game console.

12. The game controller (100) according to claim 11, **characterized in that** the first control unit (102) comprises the touch screen (108) as an exclusive control member for direct interaction on the displayed information and/or images and **in that** the second control unit (104) comprises control buttons (112) accessible through an opening of the housing (110).

13. A game system comprising a parlour video game console, a central display device and at least two game controllers (100) according to claim 11 or 12, **characterized in that** each game controller is able to be used in a network with other game controllers connected to the console, the central display device being able to display information and/or images relating to the game, shared among the different game controllers and the display means (106) of each game controller being able to display customized information and/or images relating to the game.

14. The game system according to claim 13, **characterized in that** the customized information and/or images are able to be simultaneously modified by means of the signals received from the accelerometer and/or tilt sensors and/or by means of tactile commands received from the touch screen (108) of the corresponding game controller (100).
